# EUROPEAN PATENT APPLICATION

(11) **EP 4 700 342 A1**
(43) Date of publication of application: **25.02.2026**
(21) Application number: 24306383.1
(22) Date of filing: 21.08.2024
(51) Int. Cl.: G01H 9/00, G01D 5/353, G01V 1/22

(54) **A DISTRIBUTED ACOUSTIC SENSING FOR OPTICAL ACCESS FIBER NETWORKS**

(71) Applicant: Institut Mines Telecom, 91120 Palaiseau (FR)
(72) Inventor: CHOUDHURY, Pallab Kumar, 91120 Palaiseau (FR); AWWAD, Elie, 92160 Antony (FR)
(74) Representative: Ipsilon

(57) **Abstract**

A distributed Acoustic Sensing for optical access fiber networks.

The invention relates to a distributed acoustic sensing interrogator (1) comprising:
- a transmitter (2) configured to emit N optical sensing signals, each optical sensing signal having a wavelength (λ_{S1-N}) different than the other optical sensing signals, N being strictly greater than 1,
- a demultiplexer (7₁₋₂) comprising N optical channels (8_{1-2N}) and being configured to direct each optical sensing signal into one of the optical channels chosen on the basis of the wavelength of the optical sensing signal, the demultiplexer being intended to be connected to a fiber network comprising a plurality of optical fibers, with each optical channels connected to one of the optical fibers,
- a receiver (9) intended to be connected to the fiber network and being configured to measure backscattered signals returning from each optical fiber, the measuring of each backscattered signal being distinguished from the measuring of the other backscattered signals.

## Description

### Technical field

The present invention relates to distributed optical fiber sensing, notably to distributed acoustic sensing (DAS). In particular, the present invention relates to a DAS interrogator and a method for determining quantitative information about acoustic environmental event acting on an optical fiber.

### Prior art

Fiber optic distributed acoustic sensing (DAS) is a known method wherein an optical signal is sent into an optical fiber and a part of said optical signal is backscattered by Rayleigh scattering. This backscattered part is measured to detect and localize an acoustic environmental event acting on the optical fiber.

The acoustic environmental event can be due to a pipeline leakage, road traffic, seismic activity, infrastructure crack, as bridge crack or building crack, or infrastructure repairs, as rail line repair or road repair.

The acoustic environmental event induces a mechanical vibration on the optical fiber which alter the backscattered part of the optical signal. By analyzing the alteration of the backscattered part, it is possible to detect and localize the acoustic environmental event.

The DAS is particularly used with the telecom network fibers to locate acoustic environmental event for different applications such as optical network monitoring, infrastructural health monitoring, cracks detection, road safety, GPS, earthquake detection and so on. The telecom network fibers act as an array of distributed sensing fibers and allow the detection and localization of acoustic environmental event in real time over large areas.

Usually, the known systems using DAS with telecom network fibers mostly focus on point-to-point link. A point-to-point link is a direct communication link to connect two devices without any networking in between. Those systems comprise a DAS integrator arranged in each point-to-point link of the telecom network to detect and localize acoustic environmental event.

However, it is not known a satisfying system adapted to use DAS on point-to-multipoint link. A point-to-multipoint link is a communication link to connect a device with multiple other devices by providing a single optical line connected to multiple optical paths at a remote point.

A point-to-multipoint link can comprise a passive optical network (PON). A PON comprises a passive splitter and an optical feeder fiber termination to connect central office to said passive splitter. The passive splitter connects the optical feeder fiber termination to different optical fibers, each optical fiber being connected to an optical network unit (ONU).

The main issue to overcome for using DAS in point-to-multipoint link is the identification of the optical fiber from which the backscattered optical signal comes from. Another difficulty, in particular regarding the use of DAS over PON, is that a splitter significantly reduces the backscattered optical signal power.

The patent US 10,917,168 B2 describes a system for using DAS over PON, where a reflective semiconductive optical amplifier (RSOA) is used for each ONU to minimize the optical power loss introduced by the splitter. The optical fiber from which the backscattered optical signal comes from is identified by considering that each ONU works in a different time slot. Nevertheless, this system is unsatisfying because the use of RSOA for each ONU is significantly costly and difficult to implement. Furthermore, the method for identifying the path from which the backscattered optical signal comes from is not compatible with most of the already existing telecom network.

Another system has been proposed for using DAS over PON in the article of B. Zhu et al.: "Distributed Acoustic Sensing Over Passive Optical Networks Using Enhanced Scatter Fiber", 2024 Optical Fiber Communications Conference and Exhibition (OFC), San Diego, CA, USA, 2024. This system uses enhanced scattering fibers to provide strong reflectivity of the backscattered signal. However, enhanced scattering fibers are not commonly used in the actual telecom network, thus, this system is not compatible with most of the already existing telecom networks. Moreover, the identification of the optical fiber from which the backscattered optical signal comes from necessitates that each optical fiber has a different length than the other optical fibers, which is also not compatible with many of the already existing telecom networks.

Therefore, there is a need for a DAS system adapted to be used over point-to-multipoint link which overcome the previously explained problems. In particular, there is a need for a DAS system which can identify the optical fiber of a point-to-multipoint link from which the backscattered optical signal comes from, said DAS system being easy to implement in already existing telecom networks.

There is also a need for a DAS system which overcome the issue of optical power loss caused by the splitter in a PON.

There is also a need for a DAS system that can provide backhauling support to every kind of optical access networks, including fiber to the antenna and fiber to the enterprise, by sending optical sensing signal over deployed fibers without causing any interference with the optical data signal of said networks.

The invention aims to address all or some of these needs.

### Summary of the invention

The subject of the invention is a distributed acoustic sensing (DAS) interrogator comprising:
- a transmitter configured to emit at least N optical sensing signals, each sensing signal having a wavelength different than the N-1 other optical sensing signals, N being a number strictly greater than 1,
- at least one demultiplexer comprising at least N optical channels, the demultiplexer being configured to direct each optical sensing signal into one of the optical channels chosen on the basis of the wavelength of the optical sensing signal, the demultiplexer being intended to be connected to a fiber network, comprising a plurality of optical fibers, with each optical channels connected to one of the optical fibers,
- a receiver intended to be connected to the fiber network, the receiver being configured to measure backscattered signals returning from each optical fiber, the measuring of each backscattered signal being distinguished, on the basis of the wavelength of said backscattered signal, from the measuring of the other backscattered signals.

Preferably, the distributed acoustic sensing interrogator comprises at least one optical modulator configured to modulate with a first orthogonal code each optical sensing signal transmitted by the transmitter to the at least one demultiplexer.

Preferably, the distributed acoustic sensing interrogator comprises at least two demultiplexers, at least two optical modulators and a coupler to direct each optical sensing signal towards each demultiplexer, one of the optical modulators, called first optical modulator, being arranged between the transmitter and one of the demultiplexers, called first demultiplexer, the first optical modulator being configured to modulate with the first orthogonal code each optical sensing signal transmitted by the transmitter to the first demultiplexer, and, another of the optical modulators, called second optical modulator, being arranged between the transmitter and another of the demultiplexers, called second demultiplexer, the second optical modulator being configured to modulate with a second orthogonal code, complementary to the first orthogonal code, each optical sensing signal transmitted by the transmitter to the second demultiplexer.

Preferably, the first and second orthogonal codes are Golay codes or constant amplitude zero auto-correlation codes.

In a first embodiment, the transmitter can comprise a frequency comb generator configured to emit an optical frequency comb comprising each optical sensing signal. Preferably, the frequency comb generator comprises a mode-locked laser and/or an electro-optic modulator.

In a second embodiment, the transmitter can comprise an array of laser sources, each laser source being configured to emit one of the optical sensing signals.

The receiver can comprise an array of photodetectors, and a demultiplexer configured to direct each backscattered signal towards one of the photodetectors chosen on the basis of the wavelength of the backscattered signal.

Alternatively, the receiver can comprise a photodetector having a spectral bandwidth comprising several or every wavelength of the optical sensing signals, the photodetector converting each backscattered signal into a digital signal having the same wavelength of said backscattered signal, the receiver comprising an array of digital filters configured to sort each digital signal converted by the photodetector on the basis of the wavelength of said digital signal.

Preferably, the receiver is configured to measure the backscattered signals with a homodyne coherent detection, preferably with a single or dual polarization homodyne coherent detection.

The present invention also concerns a distributed acoustic sensing architecture comprising:
- a fiber network comprising a plurality of optical fibers,
- the distributed acoustic sensing interrogator according to the present invention, each optical channels being connected to one of the optical fibers and the receiver being connected to the fiber network,
- a processor configured to detect, from the measuring of backscattered signals, an alteration of one of the backscattered signals, called altered backscattered signal, caused by an acoustic environmental event and to localize said acoustic environmental event by determining, at least on the basis of the wavelength of said altered backscattered signal, from which optical fiber the altered backscattered signal is returning from.

Preferably, the processor is configured so that the determination of the optical fiber from which the altered backscattered signal is returning from is also performed on the basis of the orthogonal code modulation of said altered backscattered signal.

In a first variant, the fiber network can be a telecom network comprising a point-to-multipoint link, preferably a passive optical network, comprising:
- an optical feeder fiber termination intended to be connected to a central office,
- the optical fibers, each optical fiber being intended to be connected to a corresponding optical network unit,
- a splitter, preferably a passive splitter, connecting the optical feeder fiber termination to each optical fibers,
the receiver being connected to the optical feeder fiber termination to receive the backscattered signals returning from the optical fibers.

Advantageously, the distributed acoustic sensing interrogator can be arranged at the remote node of the point-to-multipoint link.

In a second variant, the fiber network can be a telecom network comprising a central office and at least one wavelength division multiplexing architecture comprising:
- a first multiplexer/demultiplexer to transmit optical data signals emitted by the central office,
- a second multiplexer/demultiplexer at a remote point of the telecom network,
- an optical feeder fiber, being one of the optical fibers, connecting the first multiplexer/demultiplexer to the second multiplexer/demultiplexer,
the second multiplexer/demultiplexer being connected to a plurality of optical lines and being configured to direct each optical data signal, transmitted by the first multiplexer/demultiplexer, into one of the optical lines chosen on the basis of the wavelength of the optical data signal, at least one of the optical channels of the distributed acoustic sensing interrogator being connected to the optical feeder fiber, the receiver being connected to the optical feeder fiber to receive the backscattered signals returning from said optical feeder fiber.

Preferably, the distributed acoustic sensing interrogator is integrated inside the central office.

The central office can comprise several wavelength division multiplexing architectures. Advantageously, each optical channel of the distributed acoustic sensing interrogator can work independently from the other optical channels. Thus, the distributed acoustic sensing interrogator can selectively and distinctively sense each wavelength division multiplexing architecture.

Preferably, a plurality of the optical channels of the distributed acoustic sensing interrogator is connected to the optical feeder fiber, each of the optical sensing signals transmitted by said optical channels having a wavelength different from the wavelength of the optical data signals transmitted by the first multiplexer/demultiplexer, the wavelength division multiplexing architecture comprising a third multiplexer/demultiplexer, connected to the optical feeder fiber, and a splitter configured to direct the optical data signals, respectively the optical sensing signals, transmitted by the optical feeder fiber towards the second multiplexer/demultiplexer, respectively the third multiplexer/demultiplexer, the third multiplexer/demultiplexer being connected to the optical lines, being optical fibers, and being configured to direct each optical sensing signal into one of the optical lines chosen on the basis of the wavelength of the optical sensing signal.

The present invention also has for object a method for distributed acoustic sensing, using the distributed acoustic sensing architecture of the present invention, the method comprising the successive steps:
a) emitting at least N optical sensing signals, each optical sensing signal having a wavelength different than the other signals, N being a number strictly greater than 1,
b) transmitting each the optical sensing signal into one of the optical fibers, a part of said optical sensing signal being backscattered by said one of the optical fibers, said part being called backscattered signal,
c) measuring by the receiver each backscattered signal and determining from which of the optical fibers said backscattered signal is returning from,
d) optionally, detecting an alteration of at least one of the backscattered signals caused by an acoustic environmental event and localizing said acoustic environmental event.

Therefore, the present invention mainly consists of a DAS interrogator using different wavelengths for the optical sensing signals.

By using different wavelengths, it is possible to identify the optical fiber of a point-to-multipoint link from which the backscattered optical signal comes from without needing to modify the architecture of said point-to-multipoint link.

Moreover, the DAS interrogator according to the present invention can also be used in a central office to cover the wavelength per user services like fiber to the antenna (FTTA), fiber to the enterprises (FTTE) or fiber to the home (FTTH).

The DAS interrogator according to the present invention can be integrated in the already existing telecom networks without requiring any change for said telecom networks.

The DAS interrogator can also be easily integrated in the remote node of a point-to-multipoint link, for example of a PON.

The DAS interrogator can also be easily integrated into a central office of a telecom network.

In a preferable embodiment, the DAS interrogator also uses orthogonally coded modulations for the optical sensing signals. The use of such orthogonally coded modulations, advantageously with low average optical power, avoids that the optical sensing signals interfere with the optical data signals of the telecom network while being transmitted by the same optical fiber, even when the space between the wavelengths used for the optical sensing signals and the wavelengths used for the optical data signals is small. Therefore, the use of such orthogonally coded modulations for the optical sensing signals shows better performance than the DAS interrogator of the prior art. Usually, the DAS interrogator of the prior art mostly used pulse based probing signal.

Furthermore, the use of orthogonally coded modulations for the optical sensing signals multiplies the number of optical fibers that the DAS interrogator can probe without increasing the number of wavelengths used by said DAS interrogator. Thus, the bandwidth used by the DAS interrogator can be reduced. The correlation of orthogonally coded modulations is a reliable way to determine from which optical fiber a backscattered signal is returning from, while still permitting the detection of low amplitude acoustic environmental event with sufficient accuracy.

The DAS interrogator according to the present invention does not require a high optical power to determine from which optical fiber a backscattered signal is returning from. Thus, the DAS interrogator according to the present invention overcome the issue of optical power loss caused by the splitter in a PON.

### Brief description of the drawings

Other advantages and features of the invention will become more apparent on reading the detailed description of exemplary implementations of the invention, given as illustrative and non-limiting examples with reference to the following figures.
[Fig 1] Figure 1 is a schematic representation of a DAS interrogator according to the present invention, the transmitter of said DAS interrogator comprising a frequency comb generator and the receiver of said DAS interrogator comprising an array of low bandwidth photodetectors.
[Fig 2] Figure 2 is a schematic representation of a DAS architecture according to the present invention, the DAS architecture comprising a PON.
[Fig 3] Figure 3 is a schematic representation of a DAS interrogator according to the present invention, the transmitter of said DAS interrogator comprising a frequency comb generator and the receiver of said DAS interrogator comprising one high bandwidth photodetector.
[Fig 4] Figure 4 is a schematic representation of a DAS architecture according to the present invention, the DAS architecture comprising a central office wherein the DAS interrogator is integrated to provide simultaneous sensing services to different access locations.
[Fig 5] Figure 5 is a schematic representation of a simulation model of a DAS interrogator according to the present invention, the transmitter of said DAS interrogator comprising an array of laser sources.
[Fig 6A], [Fig 6B], [Fig 6C] and [Fig 6D] Figures 6A to 6D are the measurements of the backscattered signal returning from the first optical fiber of the simulation model illustrated by figure 5.
[Fig 7A], [Fig 7B], [Fig 7C] and [Fig 7D] Figures 7A to 7D are the measurements of the backscattered signal returning from the second optical fiber of the simulation model illustrated by figure 5.
[Fig 8A], [Fig 8B], [Fig 8C] and [Fig 8D] Figures 8A to 8D are the measurements of the backscattered signal returning from the third optical fiber of the simulation model illustrated by figure 5.
[Fig 9A], [Fig 9B], [Fig 9C] and [Fig 9D] Figures 9A to 9D are the measurements of the backscattered signal returning from the fourth optical fiber of the simulation model illustrated by figure 5.

### Detailed description

The following illustrates the principles of the present invention which encompass both structural and functional equivalents. Any block diagrams herein represent conceptual views of illustrative circuitry embodying the principles of the present invention. Unless specified otherwise, the figures are not drawn to scale.

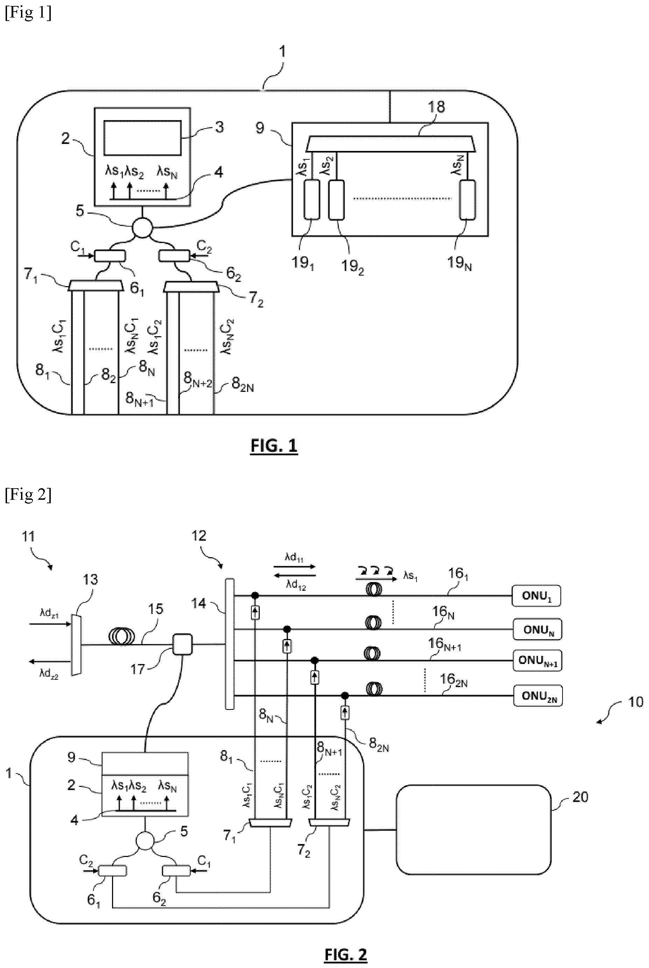

Figure 1 illustrates a distributed acoustic sensing (DAS) interrogator 1 according to the present invention. The DAS interrogator 1 comprises a transmitter 2 to emit N optical sensing signals in the form of light pulses, N being a number strictly higher than 1. Each optical sensing signal has a wavelength λs_{1-N} different than the wavelength λs_{1-N} of the other optical sensing signals. The wavelengths λs_{1-N} are all comprised in a sensing wavelength band, called L-band.

In the figure 1, the transmitter 2 comprises a frequency comb generator 3 to emit a frequency comb 4 comprising the optical sensing signals. The frequency comb generator 3 is configured to maintain a free spectral range for the frequency comb 4 in the GHz range, for example comprises between 1 and 100 GHz. Thus, by using a frequency comb generator, it is possible to generate many frequencies with narrow spacing. The frequency comb generator 3 can comprise an electro-optic modulator and/or a mode-locked laser.

The DAS interrogator 1 also comprises a coupler 5 and at least two optical modulators 6₁₋₂. The coupler 5 is configured to direct each optical sensing signal towards each optical modulator 6₁₋₂. Thus, each optical modulator 6₁₋₂ received each of the optical sensing signals.

One of the optical modulators 6₁₋₂, called first optical modulator 6₁, is configured to modulate each optical sensing signal with a first orthogonal code C₁. Another of the optical modulators 6₁₋₂, called second optical modulator 6₂, is configured to modulate each optical sensing signal with a second orthogonal code C₂. In the embodiment illustrated by figure 1, the first and second orthogonal codes C₁ and C₂ are Golay complementary pair codes. However, the invention can be implemented by other codes having the orthogonality property.

Thus, at the outputs of the optical modulators 6₁₋₂, there is 2N different optical sensing signals, each optical sensing signal being characterized by its wavelength λs_{1-N} and its orthogonal code C₁₋₂. For the following description, the optical sensing signal having the wavelength λsₓ, x being a number between 1 and N, and the orthogonal code C_{y}, y being 1 or 2, is written as "the optical sensing signal λsₓC_{y}".

For each optical modulator 6₁₋₂, the DAS interrogator 1 comprises a demultiplexer 7₁₋₂ connected to the output of said optical modulator 6₁₋₂. Each demultiplexer 7₁₋₂ comprises N optical channels 8_{1-2N} and is configured to direct each optical sensing signal received by said demultiplexer into one of the N optical channels 8_{1-2N} chosen on the basis of the wavelength λs_{1-N} of the optical sensing signal.

The demultiplexer 7₁, called first demultiplexer 7₁, connected to the output of the first optical modulator 6₁, comprise an optical channel 8₁ to transmit the optical sensing signal λs₁C₁, another optical channel 8₂ to transmit the optical sensing signal λs₂C₁, and so on for every optical sensing signal λsₓC₁, with x going from 1 to N. Similarly, the demultiplexer 7₂, called second demultiplexer 7₂, connected to the output of the second optical modulator 6₂, comprise an optical channel 8_{N+1} to transmit the optical sensing signal λs₁C₂, another optical channel 8_{N+2} to transmit the optical sensing signal λs₂C₂, and so on for every optical sensing signal λsₓC₂, with x going from 1 to N. Therefore, there is 2N different optical channels 8_{1-2N}, each optical channel 8_{1-2N} corresponding to one of the optical sensing signals distinct from the other optical sensing signals by its wavelength and its orthogonal code.

The DAS interrogator 1 also comprises a receiver 9 which will be furtherly described after explaining the connection between the transmitter 2 and a fiber network in a DAS architecture according to the present invention.

Figure 2 illustrates a DAS architecture 10 according to the present invention. The DAS architecture 10 comprises the DAS interrogator 1 and a fiber network 11 of a telecom network. The fiber network 11 comprises a central office 13 and 2N different optical network units, called ONU_{1-2N}. The fiber network 11 also comprises a passive optical network (PON) 12 to connect the central office 13 to each ONU_{1-2N}.

The PON 12 comprises a passive splitter 14 and an optical feeder fiber termination 15 to connect the central office 13 to said passive splitter 14. The passive splitter 14 connects the optical feeder fiber termination 15 to 2N different optical fibers 16_{1-2N} comprised by the PON 12.

Each optical fiber 16_{z} is connected to a corresponding ONU_{z}, z being a number between 1 and 2N. Meaning that the optical fiber 16₁ is connected to the ONU₁, the optical fiber 16₂ is connected to the ONU₂, and so on for every optical fiber 16_{z}, with z going from 1 to 2N.

The optical feeder fiber termination 15 can have a length comprised between 25 and 30 km. Each optical fiber 16_{1-2N} can have a length comprised between 1 to 5 km. The optical fiber 16_{1-2N} can also be called "*distribution fiber*" or "*drop fiber*" in the technical field of the present invention.

For each ONU_{z}, the central office 13 communicates with said ONU_{z} by sending an optical data signal with a first wavelength λd_{z1}, and the ONU_{z} communicates with the central office 13 by sending an optical data signal with a second wavelength λd_{z2} different from the first wavelength λd_{z1}. The passive splitter 14 is configured to transmit the optical data signal emitted by the central office 13 towards the ONU_{z} with which the central office 13 wants to communicate.

For example, the central office 13 communicates with the ONU₁ by sending an optical data signal with the first wavelength λd₁₁, said data signal being transmitted by the passive splitter 14 towards the ONU₁. The ONU₁ communicates with the central office 13 by sending an optical data signal with a second wavelength λd₂₂ different from the first wavelength λd₁₁, said optical data signal being transmitted through the passive splitter 14 to arrive to the central office 13.

Preferably, the first and second wavelengths λd_{z1} and λd_{z2} of the optical data signals, used by the central office 13 and the ONU_{1-2N} to communicate with each other, are all different from the wavelengths λs_{1-N} of the optical sensing signals. More preferably, the first and second wavelengths λd_{z1} and λd_{z2} of the optical data signals are comprised in a data wavelength band, called C-band, which is different from the L-band. In particular, the C-band and the L-band do not share any common wavelength. Alternatively, the C-band and the L-band can overlap partially or completely, meaning that they can share common wavelengths, with the wavelengths of the optical data signals being different from the wavelengths λs_{1-N} of the optical sensing signals.

At least one of the ONU_{1-2N}, preferably each of the ONU_{1-2N}, comprises a transceiver architecture adapted for intensity modulation and direct detection (IM/DD).

In the DAS architecture 10 illustrated by figure 2, each demultiplexer 7₁₋₂ is connected to the PON 12 with each optical channel 8_{1-2N} connected to a corresponding optical fiber 16_{1-2N} of the PON 12. In particular, each optical channel 8_{1-N} of the first demultiplexer 7₁ is connected to one of the optical fiber 16_{1-N}, with the optical channel 8₁ connected to the optical fiber 16₁, the optical channel 8₂ connected to the optical fiber 16₂, and so on. Similarly, each optical channel 8_{N+1-2N} of the second demultiplexer 7₂ is connected to one of the optical fibers 16_{N+1-2N}, with the optical channel 8_{N+1} connected to the optical fiber 16_{N+1}, the optical channel 8_{N+2} connected to the optical fiber 16_{N+2}, and so on. Thus, every optical channel 8ₓ is connected to a corresponding optical fiber 16_{z}, with x being equal to z and going from 1 to 2N.

Every optical sensing signal λsₓC₁ is transmitted by the optical channel 8ₓ to the corresponding optical fiber 16ₓ, for x going from 1 to N. Meaning that the optical sensing signal λs₁C₁ is transmitted by the optical channel 8₁ to the corresponding optical fiber 16₁, the optical sensing signal λs₂C₁ is transmitted by the optical channel 8z to the corresponding optical fiber 16₂, and so on.

Every optical sensing signal λsₓC₂ is transmitted by the optical channel 8_{N+x} to the corresponding optical fiber 16_{N+x}, for x going from 1 to N. Meaning that the optical sensing signal λs₁C₂ is transmitted by the optical channel 8_{N+1} to the corresponding optical fiber 16_{N+1}, the optical sensing signal λs₂C₂ is transmitted by the optical channel 8_{N+2} to the corresponding optical fiber 16_{N+2}, and so on.

Consequently, the DAS interrogator 1 is configured to emit a specific optical sensing signal λsₓC_{y} into each optical fiber 16_{1-2N}. When an optical sensing signal λsₓC_{y} is circulating in the corresponding optical fiber 16_{1-2N}, said optical sensing signal λsₓC_{y} is partially backscattered by Rayleigh scattering. The part of each optical sensing signal λsₓC_{y} which is backscattered in the optical fiber 16_{1-2N} is called the backscattered signal λsₓC_{y}, said backscattered signal λsₓC_{y} being characterized by its wavelength λsₓ and by its orthogonal code C_{y} which are the same than said optical sensing signal λsₓC_{y}.

Each backscattered signal λsₓC_{y} is transmitted through the passive splitter 14 in the direction of the optical feeder fiber termination 15. The receiver 9 of the DAS interrogator 1 is connected to the PON 12 in order to receive every backscattered signal λsₓC_{y}. In particular, the PON 12 comprises a wavelength filter 17 configured to direct every optical signal having a wavelength equal to one of the wavelengths λs_{1-N} towards the receiver 9 and to direct every optical signal having a wavelength equal to one of the data-carrying wavelengths λd_{z2} towards the central office 13. More particularly, the wavelength filter 17 can be configured to direct every optical signal having a wavelength comprised in the L-band towards the receiver 9 and every optical signal having a wavelength comprised in the C-band towards the central office 13.

The receiver 9 of the DAS interrogator 1 is configured to measure the backscattered signals λsₓC_{y}, the measuring of each backscattered signal λsₓC_{y} being distinguished, on the basis of the wavelength λsₓ of said backscattered signal λsₓC_{y}, from the measuring of the other backscattered signals λsₓC_{y}.

Going back to figure 1, the receiver 9 of the DAS interrogator 1 comprises a demultiplexer 18 and an array of N low bandwidth photodetectors 19_{1-N}. Each low bandwidth photodetector 19ₓ is configured to measure a backscattered signal λsₓC_{y} having a corresponding wavelength λsₓ, with x going from 1 to N. Meaning that the low bandwidth photodetector 19₁ is configured to measure the backscattered signals λs₁C₁ and λs₁C₂ having the wavelength λs₁, the low bandwidth photodetector 19₂ is configured to measure the backscattered signals λs₂C₁ and λs₂C₂ having the wavelength λs₂, and so on. The measuring of a backscattered signal for DAS is usual knowledge for a man skilled in the art.

The demultiplexer 18 is configured to direct each backscattered signal λsₓC_{y} received by the receiver 9 towards one of the low bandwidth photodetectors 19_{1-N} chosen on the basis of the wavelength λsₓ of the backscattered signal. The demultiplexer 18 is thus configured so that each low bandwidth photodetector 19ₓ will receive the backscattered signals λsₓC_{y} having the corresponding wavelength λsₓ, with x going from 1 to N.

Furthermore, the DAS interrogator 1 is configured so that each optical sensing signal emitted by the transmitter 2 is also sent towards the receiver 9. The part of the optical sensing signal sent to the receiver is called local oscillator. For example, the coupler 5 is configured to direct each optical sensing signal emitted by the transmitter 2 towards the receiver 9. The receiver 9 is then configured so that the optical sensing signal having the wavelength λsₓ measurable by the corresponding low bandwidth photodetector 19ₓ is sent to said low bandwidth photodetector 19ₓ.

The low bandwidth photodetectors 19_{1-N} are configured to measure the backscattered signals with a homodyne coherent detection, preferably with a single or dual polarization homodyne coherent detection.

Going back to figure 2, the DAS architecture 10 also comprises a processor 20. The processor 20 can be integrated in the DAS interrogator 1. The measurements of the backscattered signals performed by the receiver 9 are transmitted to the processor 20.

The processor 20 realizes a correlation with the orthogonal code C₁₋₂ for each measured backscattered signal to determine with which orthogonal code C₁₋₂ said backscattered signal have been modulated.

Then, because the measuring of each backscattered signal λsₓC_{y} has been performed distinctively, on the basis of the wavelength λsₓ of said backscattered signal λsₓC_{y}, thus the processor 20 knows the wavelength λsₓ and the orthogonal code C_{y} of each backscattered signal λsₓC_{y}. The processor 20 is configured to determine, based on the wavelength λsₓ and the orthogonal code C_{y}, from which optical fiber 16_{1-2N} each backscattered signal λsₓC_{y} came from.

The processor 20 is also configured to realize a differential phase estimation for each measured backscattered signal. From this, the processor 20 calculates the standard deviation of differential phase of each backscattered signal λsₓC_{y} in function of the fiber length travelled by said backscattered signal.

For each backscattered signal, the processor 20 detects if said backscattered signal has been altered by an acoustic environmental event by detecting the presence of a peak in the standard deviation of differential phase of said backscattered signal. The processor 20 can localize the position of acoustic environmental event by knowing the fiber length corresponding to the peak in the standard deviation of differential phase, and by knowing from which optical fiber 16_{1-2N} the altered backscattered signal came from.

For each altered backscattered signal, the processor 20 can calculate the power spectral density of said backscattered signal at the fiber length corresponding to the position of the acoustic environmental event. The processor 20 can determine the frequency of the acoustic environmental event based on this power spectral density of the altered backscattered signal.

For each altered backscattered signal, the processor 20 can calculate the estimated differential phase of said backscattered signal in function of time at the fiber length corresponding to the position of the acoustic environmental event. The processor 20 can determine the frequency of the acoustic environmental event based on this estimated differential phase of the altered backscattered signal.

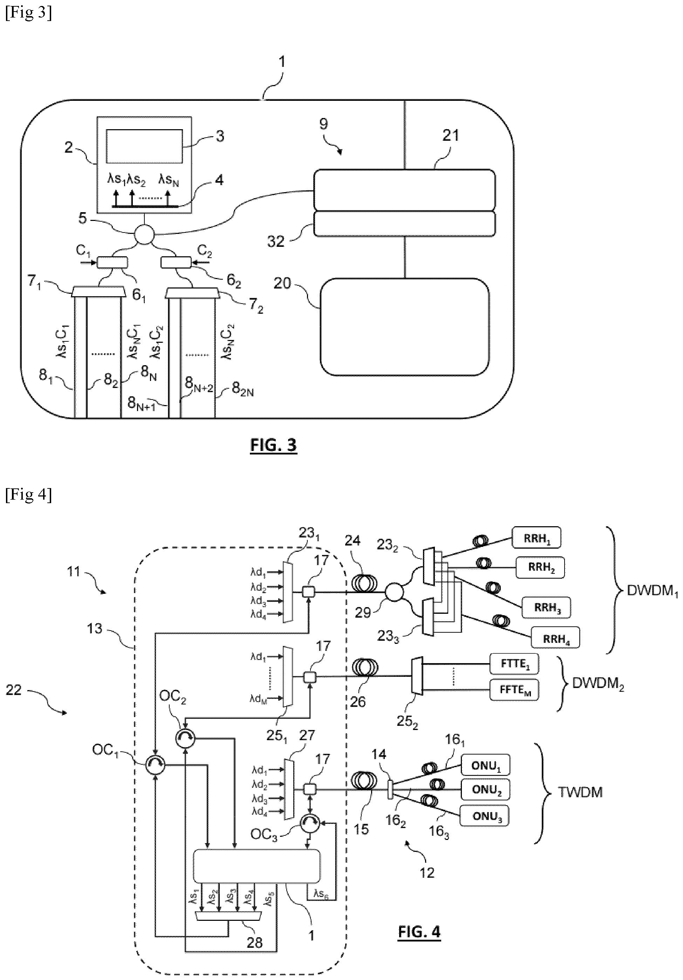

Figure 3 illustrates another DAS interrogator 1 according to the present invention. The DAS interrogator 1 illustrated by figure 3 differs from the DAS interrogator 1 illustrated by figure 1 in that the receiver 9 comprises a wide bandwidth photodetector 21 instead of the demultiplexer 18 and the array of low bandwidth photodetectors 19_{1-N}. The wide bandwidth photodetector 21 has a spectral bandwidth comprising several, preferably every, frequency slots of the L-band.

The wide bandwidth photodetector 21 is configured to convert each backscattered signal received by the receiver 9 into a corresponding digital signal having the same wavelength than said backscattered signal.

The receiver 9 also comprises an array of digital filters 32 to digitally filtered every digital signal from the wide bandwidth photodetector 21. The array of digital filters 32 is configured to sort each digital signal from the photodetector on the basis of the wavelength of said digital signal.

The DAS interrogator 1 illustrated by figure 3 differs from the DAS interrogator 1 illustrated by figure 1 in that the processor 20 is comprised by the DAS interrogator 1.

Figure 4 illustrates another DAS architecture 22 according to the present invention. The DAS architecture 22 comprises a fiber network 11 comprising a central office 13, a plurality of ONU₁₋₃, a plurality of remoted radio head, called RRH₁₋₄ and a plurality of fiber to the enterprise, called FTTE_{1-M}, M being a number strictly higher than 1. The RRH₁₋₄ are connected to the central office 13 similarly as fiber to the antenna (FTTA).

The fiber network 11 comprises a first dense wavelength division multiplexing (DWDM) architecture, called DWDM₁ architecture, to connect the central office 13 to each RRH₁₋₄. The DWDM₁ architecture comprises a first DWDM multiplexer/demultiplexer, called first Mux/DeMux 23₁, a second DWDM multiplexer/demultiplexer, called second Mux/DeMux 23z, and an optical feeder fiber 24 connecting the first Mux/DeMux 23₁ to the second Mux/DeMux 23₂.

The DWDM₁ architecture is configured so that the central office 13 communicates with the RRH₁₋₄ by sending optical data signals having a wavelength λd₁₋₄ comprised in a data wavelength band, called C-band, which is different from the L-band. In particular, the central office 13 communicates with the RRH₁ by sending an optical data signal having a wavelength of λd₁, the central office 13 communicates with the RRHz by sending an optical data signal having a wavelength of λd₂, the central office 13 communicates with the RRH₃ by sending an optical data signal having a wavelength of λd₃, the central office 13 communicates with the RRH₄ by sending an optical data signal having a wavelength of λd₄.

The fiber network 11 comprises a second dense wavelength division multiplexing (DWDM) architecture, called DWDM₂ architecture, to connect the central office 13 to each FTTE_{1-M}. The DWDM₂ architecture comprises a first DWDM multiplexer/demultiplexer, called first Mux/DeMux 25₁, a second DWDM multiplexer/demultiplexer, called second Mux/DeMux 25₂, and an optical feeder fiber 26 connecting the first Mux/DeMux 25₁ to the second Mux/DeMux 25₂.

The DWDM₂ architecture is configured so that the central office 13 communicates with the FTTE_{1-M} by sending optical data signals having a wavelength λd'_{1-M}. In particular, the central office 13 communicates with the FTTEₖ by sending an optical data signal having a wavelength of λd'ₖ, for k going from 1 to M.

The fiber network 11 also comprises a time and wavelength division multiplexing (TWDM) architecture to connect the central office 13 to each ONU₁₋₃. The TWDM architecture comprise a TWDM multiplexer/demultiplexer 27 and a PON 12 comprising a passive splitter 14 and an optical feeder fiber, being an optical feeder fiber termination 15, connecting the TWDM multiplexer/demultiplexer 27 to the splitter 14. The splitter 14 connects the optical feeder fiber termination to each ONU₁₋₃ through different optical fibers 16₁₋₃, each connected to a corresponding ONU₁₋₃. Each optical fiber 16₁₋₃ has a length different from the length of the other optical fibers 16₁₋₃.

The DAS architecture 22 also comprises the DAS interrogator 1 according to the present invention. The DAS interrogator 1 is integrated into the central office 13.

The four first optical channels 8₁₋₄ of the DAS interrogator 1 are connected to the optical feeder fiber 24 of the DWDM₁ architecture. In particular, the central office 13 comprises a multiplexer 28 connected to the end of each four first optical channels 8₁₋₄ to combine together the optical sensing signal transmitting by said optical channels 8₁₋₄ into the optical feeder fiber 24 by passing through an optical circulator OC₁.

The optical feeder fiber 24 of the DWDM₁ architecture is connected to the receiver 9 by passing through the optical circulator OC₁. The optical circulator OC₁ is configured to direct the optical sensing signals having a wavelength of λs₁₋₄ transmitted by the DAS interrogator 1 towards the optical feeder fiber 24 and to direct the backscattered signals returning from the optical feeder fiber 24 towards the receiver 9.

The DWDM₁ architecture also comprises a splitter 29 and a third multiplexer/demultiplexer, called third Mux/DeMux 23₃. The splitter 29 is configured to transmit the optical signals having a wavelength in the C-band towards the second Mux/DeMux 23₂ and the optical signals having a wavelength in the L-band towards the third Mux/DeMux 23₃.

The third Mux/DeMux 23₃ is configured to transmit the optical sensing signal having the wavelength λs₁ towards the RRH₁, the optical sensing signal having the wavelength λs₂ towards the RRH₂, the optical sensing signal having the wavelength λs₃ towards the RRH₃, the optical sensing signal having the wavelength λs₄ towards the RRH₄.

The fifth optical channel 8₅ of the DAS interrogator 1 is connected to the optical feeder fiber 26 of the DWDM₂ architecture by passing through an optical circulator OC₂. The optical feeder fiber 26 of the DWDM₂ architecture is connected to the receiver 9 by passing through the optical circulator OC₂. The optical circulator OC₂ is configured to direct the optical sensing signals having a wavelength of λs₅ transmitted by the DAS interrogator 1 towards the optical feeder fiber 26 and to direct the backscattered signals returning from the optical feeder fiber 26 towards the receiver 9.

The sixth optical channel 8₆ of the DAS interrogator 1 is connected to the optical feeder fiber termination 15 of the TWDM architecture by passing through an optical circulator OC₃. The optical feeder fiber termination 15 of the TWDM architecture is connected to the receiver 9 by passing through the optical circulator OC₃. The optical circulator OC₃ is configured to direct the optical sensing signals having a wavelength of λs₆ transmitted by the DAS interrogator 1 towards the optical feeder fiber termination 15 and to direct the backscattered signals returning from the optical feeder fiber termination 15 towards the receiver 9.

In a similar manner to what have been explained for the DAS architecture 1 of figure 2, the processor 20 of the DAS architecture 22 of figure 4 can determine from which optical fiber each backscattered signal is returning from on the basis of the wavelength of said backscattered signal.

The processor 20 determines that a backscattered signal having a wavelength of λs₁ is returning from the optical fiber connected to the RRH₁ and from the optical feeder line 24 of the DWDM₁ architecture. The processor 20 determines that a backscattered signal having a wavelength of λs₂ is returning from the optical fiber connected to the RRH₂ and from the optical feeder line 24 of the DWDM₁ architecture. The processor 20 determines that a backscattered signal having a wavelength of λs₃ is returning from the optical fiber connected to the RRH₃ and from the optical feeder line 24 of the DWDM₁ architecture. The processor 20 determines that a backscattered signal having a wavelength of λs₄ is returning from the optical fiber connected to the RRH₄ and from the optical feeder line 24 of the DWDM₁ architecture.

Therefore, the DAS interrogator 1 can cover the whole DWDM₁ architecture with the processor 20 detecting and localizing every acoustic environmental event happening at proximity to the DWDM₁ architecture and altering the backscattered signal returning from the DWDM₁ architecture. This is very useful if we consider that the optical fibers connecting the second Mux/DeMux 23₂ to each RRH₁₋₄ have a length higher than 1 km.

The processor 20 determines that a backscattered signal having a wavelength of λs₅ is returning from the optical feeder line 26 of the DWDM₂ architecture. Thus, the DAS interrogator 1 can only cover the optical feeder line 26 in the DWDM₂ architecture with the processor 20 detecting and localizing every acoustic environmental event happening at proximity said optical feeder line 26 and altering the backscattered signal returning from said optical feeder line 26. This can be sufficient if we consider that the optical fibers connecting the second Mux/DeMux 25₂ to each FTTE_{1-M} have a length lower than 100 m.

The processor 20 determines that a backscattered signal having a wavelength of λs₆ is returning from the TWDM architecture. Because each of the optical fibers 16₁₋₃ has a length different from the length of the others of the optical fibers 16₁₋₃, the processor 20 can determine from which optical fiber 16₁₋₃ each backscattered signal is returning from by considering that each ONU₁₋₃ works in a different time slot.

Therefore, the DAS interrogator 1 can cover the whole TWDM architecture with the processor 20 detecting and localizing every acoustic environmental event happening at proximity to the TWDM architecture and altering the backscattered signal returning from the TWDM architecture.

As it can be observed from the DAS architecture 22, only one DAS interrogator 1 according to the present invention is sufficient to cover a fiber network 11 comprising multiple kind of wavelength division multiplexing. Obviously, it is possible to adapt the DWDM₂ architecture similarly as the DWDM₁ architecture if the optical fibers connecting the second Mux/DeMux 25₂ to each FTTE_{1-M} have a length higher than 1 km. It is also possible to adapt the DWDM₁ architecture similarly as the DWDM₂ architecture if the optical fibers connecting the second Mux/DeMux 23₂ to each RRH₁₋₄ have a length lower than 100 m. The DAS architecture 22 of figure 4 is a non-limiting embodiment to illustrate different ways to use the DAS interrogator 1 of the present invention for different point-to-point and point-to-multipoint links.

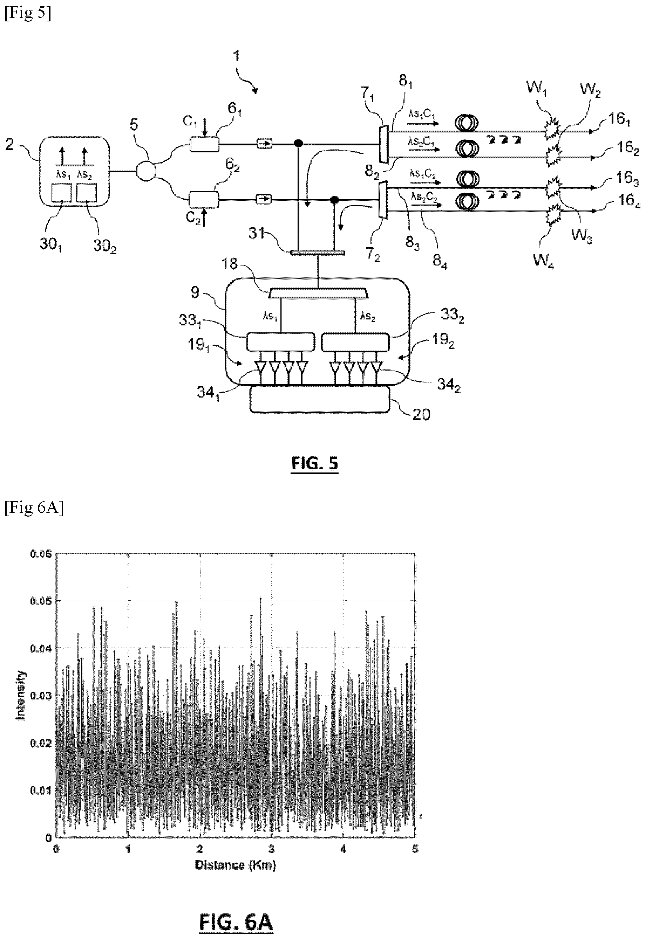

The inventors have realized a simulation model to test their invention. Figure 5 illustrates the DAS interrogator 1 according to the present invention which has been used for this simulation model. The DAS interrogator 1 comprises a transmitter 2 comprising an array of two different laser sources 30₁ and 30₂, one of the laser sources 30₁ being configured to emit an optical sensing signal with a first wavelength λs₁, the other of the laser sources 30₂ being configured to emit another optical sensing signal with a second wavelength λs₂, different from the first wavelength λs₁.

As described for the DAS interrogator 1 of figure 1, the DAS interrogator 1 of figure 5 comprises a coupler 5, a first optical modulator 6₁, a second optical modulator 6₂, a first demultiplexer 7₁, a second demultiplexer 7₂, and four different optical channels 8₁₋₄.

The DAS interrogator 1 is configured so that the optical sensing signal circulating in the first optical channel 8₁ has the first wavelength λs₁ and is modulated with the first orthogonal code C₁, the optical sensing signal circulating in the second optical channel 8₂ has the second wavelength λs₂ and is modulated with the first orthogonal code C₁, the optical sensing signal circulating in the third optical channel 8₃ has the first wavelength λs₁ and is modulated with the second orthogonal code C₂, the optical sensing signal circulating in the fourth optical channel 8₄ has the second wavelength λs₂ and is modulated with the second orthogonal code C₂. The first and second orthogonal codes C₁ and C₂ are Golay complementary pair codes.

Each optical channel 8₁₋₄ is connected to a corresponding optical fiber 16₁₋₄. Each optical fiber 16₁₋₄ has a length equal to 5 km.

For this simulation model, there was an acoustic environmental event W₁₋₄ acting each optical fiber 16₁₋₄. For the first optical fiber 16₁ the acoustic environmental event W₁ had a frequency of 100 Hz and was positioned at 1 km of fiber length from the first demultiplexer 7₁. For the second optical fiber 16z the acoustic environmental event W₂ had a frequency of 200 Hz and was positioned at 2 km of fiber length from the first demultiplexer 7₁. For the third optical fiber 16₃ the acoustic environmental event W₃ had a frequency of 300 Hz and was positioned at 3 km of fiber length from the second demultiplexer 7₂. For the fourth optical fiber 16₄ the acoustic environmental event W₄ had a frequency of 400 Hz and was positioned at 4 km of fiber length from the second demultiplexer 7₂.

After having sent a corresponding optical sensing signal in each optical fiber 16₁₋₄, the backscattered signals due to each optical sensing signal have returned back to the DAS interrogator 1. Those backscattered signals passed through the first and second demultiplexers 7₁₋₂ and have been directed towards a combiner 31 comprised by the DAS interrogator 1.

The combiner 31 combined all the backscattered signals together and transmitted them to the receiver 9 of the DAS interrogator 1. The receiver 9 comprises a demultiplexer 18, a first low bandwidth photodetector 19₁ and a second low bandwidth photodetector 19₂. The demultiplexer 18 have directed the backscattered signals having the first wavelength λs₁ towards the first low bandwidth photodetector 19₁ and the backscattered signals having the second wavelength λs₂ towards the second low bandwidth photodetector 19₂.

Each low bandwidth photodetector 19₁₋₂ comprises a coherent mixer 33₁₋₂ connected to an array of photodiodes 34₁₋₂. The coherent mixer 33₁₋₂ has a dual polarization splitting function and an extracting phase information by 90° optical hybrid function.

The measurements of the backscattered signals performed by the photodetector 19₁₋₂ are transmitted to the processor 20. The processor 20 realized a correlation with the orthogonal code C₁₋₂ for each measured backscattered signal to determine with which orthogonal code C₁₋₂ said backscattered signal have been modulated. Therefore, the processor 20 known the wavelength Xs₁₋₂ and the orthogonal code C₁₋₂ of each backscattered signal and determine, based on said wavelength λs₁₋₂ and said orthogonal code C₁₋₂, from which optical fiber 16₁₋₄ said backscattered signal came from.

The processor 20 then realized a differential phase estimation for each measured backscattered signal. Afterwards, the processor 20 detected the alteration of each backscattered signal caused by the corresponding acoustic environmental event W₁₋₄. For each acoustic environmental event W₁₋₄, the processor 20 localized the position of said acoustic environmental event W₁₋₄, meaning at which fiber length said acoustic environmental event W₁₋₄ happened. For each acoustic environmental event W₁₋₄, the processor 20 also identified said acoustic environmental event W₁₋₄, meaning it 20 measured the frequency of said acoustic environmental event W₁₋₄.

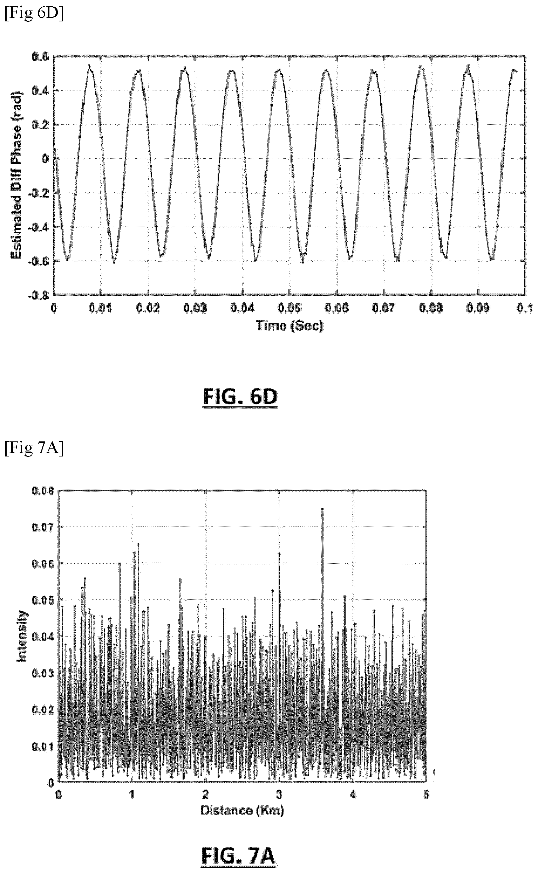

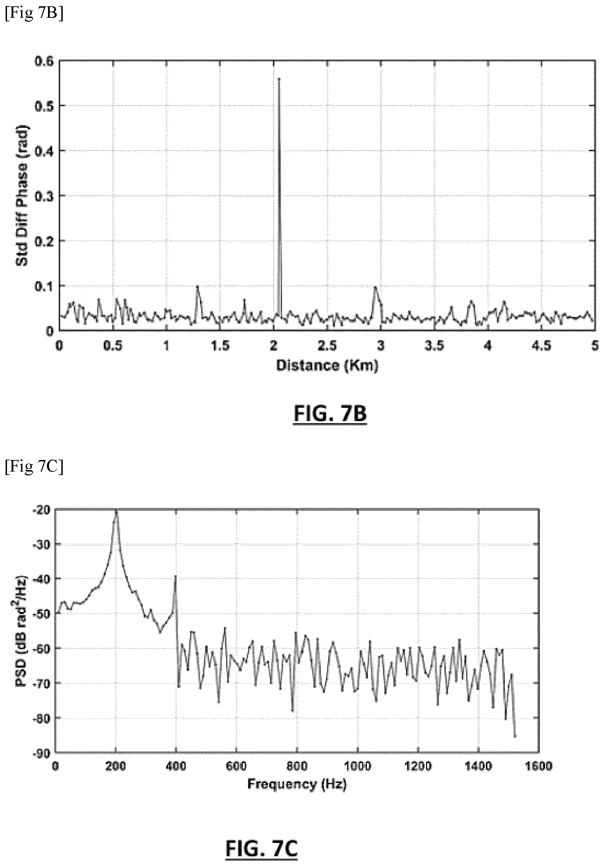

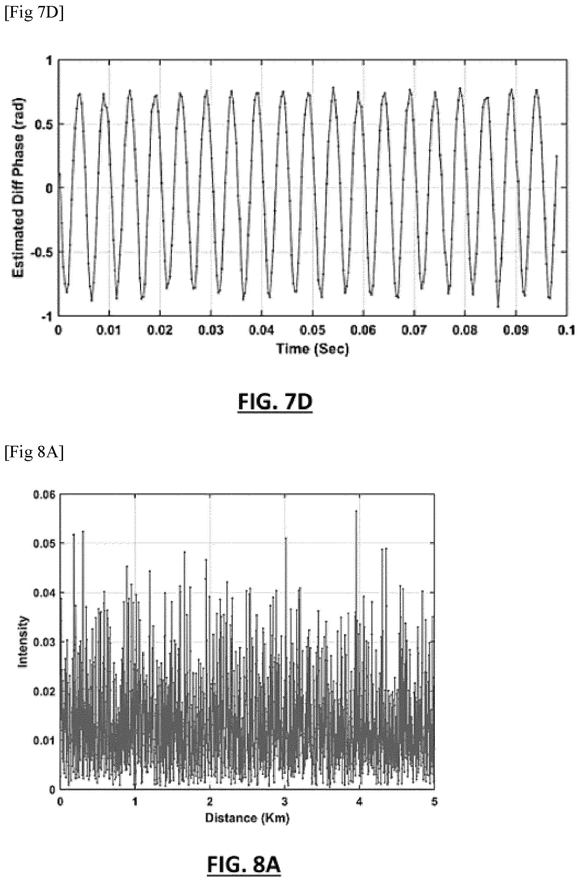

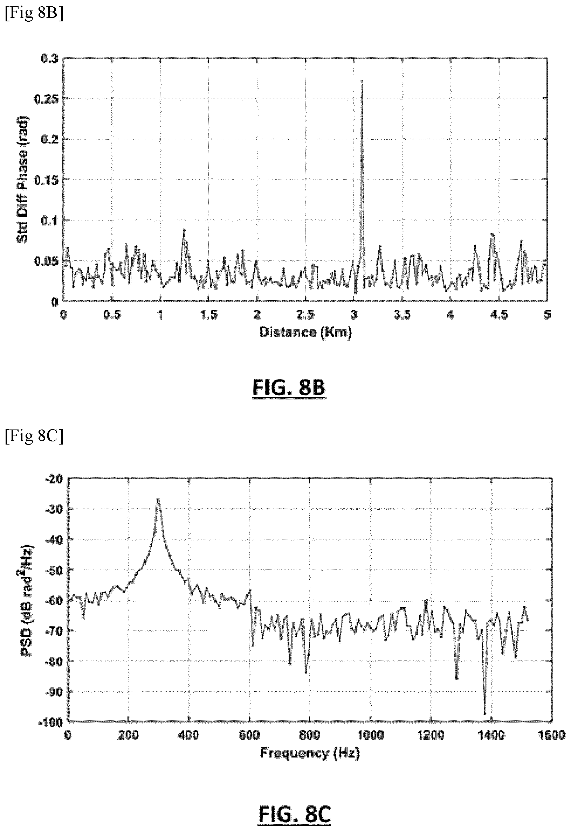

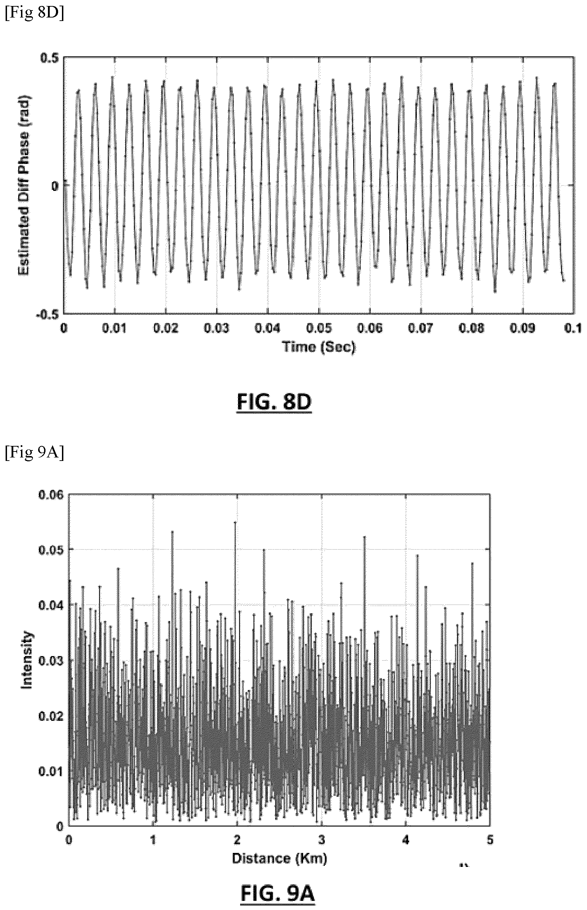

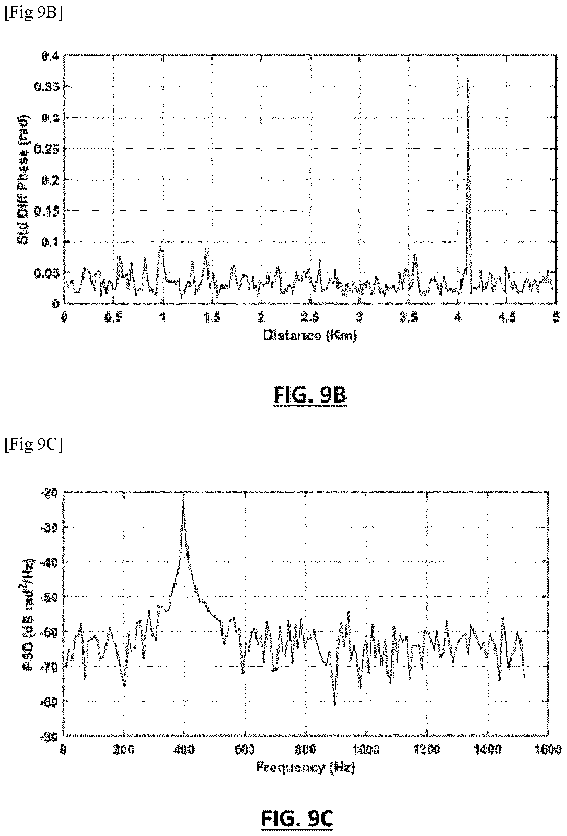

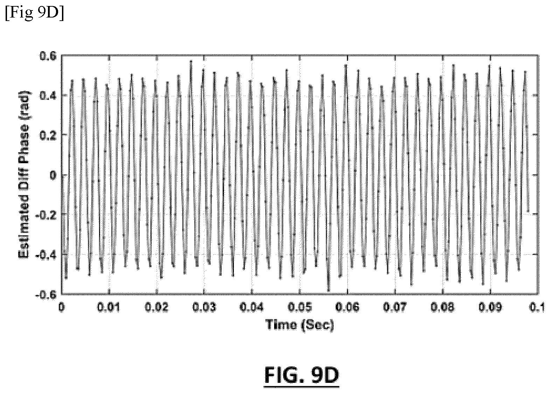

The results of this simulation are illustrated at figures 6A to 9D. Figures 6A to 6D illustrate the simulation measurements for the backscattered signal returning from the first optical fiber 16i. Figures 7A to 7D illustrate the simulation measurements for the backscattered signal returning from the second optical fiber 16z. Figures 8A to 8D illustrate the simulation measurements for the backscattered signal returning from the third optical fiber 16₃. Figures 9A to 9D illustrate the simulation measurements for the backscattered signal returning from the fourth optical fiber 16₄.

The figures 6A, 7A, 8A and 9A show the intensity of each backscattered signal in function of the fiber length travelled by said backscattered signal. As it can be observed, the intensity distribution for each backscattered signal is random.

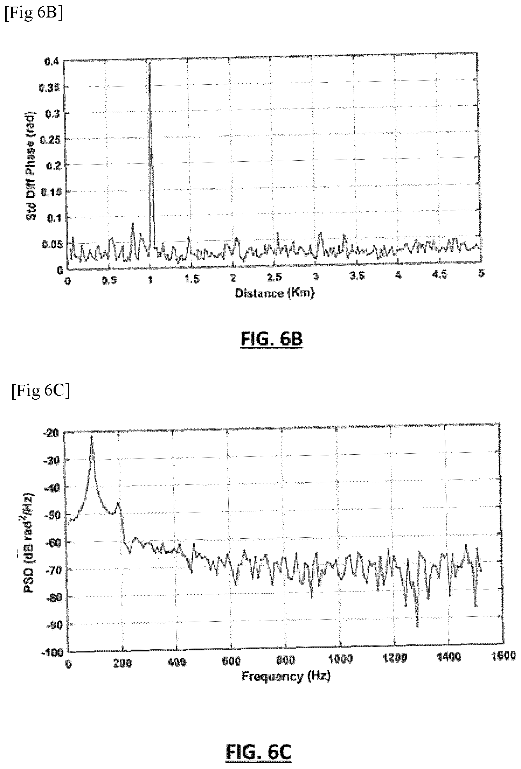

The figures 6B, 7B, 8B and 9B show the standard deviation of differential phase (Std Diff Phase) of each backscattered signal in function of the fiber length travelled by said backscattered signal. As expected, each standard deviation of differential phase shows a peak at the fiber length corresponding to the position of the acoustic environmental event W₁₋₄.

The figures 6C, 7C, 8C and 9C show the power spectral density (PSD) of the differential phase of each backscattered signal at the fiber length corresponding to the position of the acoustic environmental event W₁₋₄. The figures 6D, 7D, 8D and 9D show the estimated differential phase of each backscattered signal in function of time at the fiber length corresponding to the position of the acoustic environmental event W₁₋₄. As it can be observed, there is a peak corresponding to the frequency of each acoustic environmental event W₁₋₄, which can thus be measured.

Other variants and enhancements can be provided without in any way departing from the framework of the invention as defined in the following claims.

## Claims

1. A distributed acoustic sensing interrogator (1) comprising:
- a transmitter (2) configured to emit at least N optical sensing signals, each optical sensing signal having a wavelength (λs_{1-N}) different than the other N-1 optical sensing signals, N being a number strictly greater than 1,
- at least one demultiplexer (7₁₋₂) comprising at least N optical channels (8_{1-2N}), the demultiplexer being configured to direct each of the N optical sensing signals into one of the optical channels chosen on the basis of the wavelength of the optical sensing signal, the demultiplexer being intended to be connected to a fiber network (11) comprising a plurality of optical fibers (16_{1-2N}), with each optical channels connected to one of the optical fibers,
- a receiver (9) intended to be connected to the fiber network, the receiver being configured to measure backscattered signals returning from each optical fiber, the measuring of each backscattered signal being distinguished, on the basis of the wavelength of said backscattered signal, from the measuring of the other backscattered signals.

2. The distributed acoustic sensing interrogator according to claim 1, comprising at least one optical modulator (6₁) configured to modulate with a first orthogonal code (C₁) each optical sensing signal transmitted by the transmitter to the at least one demultiplexer.

3. The distributed acoustic sensing interrogator according to claim 2, comprising at least two demultiplexers (7₁, 7₂), at least two optical modulators (6₁, 6₂) and a coupler (5) to direct each optical sensing signal towards each demultiplexer,
one of the optical modulators, called first optical modulator (6₁), being arranged between the transmitter and one of the demultiplexers, called first demultiplexer (7₁), the first optical modulator being configured to modulate with the first orthogonal code (C₁) each optical sensing signal transmitted by the transmitter to the first demultiplexer, and,
another of the optical modulators, called second optical modulator (6₂), being arranged between the transmitter and another of the demultiplexers, called second demultiplexer (7₂), the second optical modulator being configured to modulate with a second orthogonal code (C₂), complementary to the first orthogonal code, each optical sensing signal transmitted by the transmitter to the second demultiplexer,
preferably the first and second orthogonal codes are Golay codes or constant amplitude zero auto-correlation codes.

4. The distributed acoustic sensing interrogator according to one of the preceding claims, the transmitter comprising a frequency comb generator (3) configured to emit an optical frequency comb (4) comprising each optical sensing signal, preferably the frequency comb generator comprising a mode-locked laser and/or an electro-optic modulator.

5. The distributed acoustic sensing interrogator according to one of claims 1 to 3, the transmitter comprising an array of laser sources (30₁, 30₂), each laser source being configured to emit one of the optical sensing signals.

6. The distributed acoustic sensing interrogator according to one of the preceding claims, the receiver comprising an array of photodetectors (19_{1-N}), and a demultiplexer (18) configured to direct each backscattered signal towards one of the photodetectors chosen on the basis of the wavelength of the backscattered signal.

7. The distributed acoustic sensing interrogator according to one of claims 1 to 5, the receiver comprising a photodetector (21), having a spectral bandwidth comprising several or every wavelength of the optical sensing signals, the photodetector converting each backscattered signal into a digital signal having the same wavelength of said backscattered signal,
the receiver comprising an array of digital filters (32) configured to sort each digital signal converted by the photodetector on the basis of the wavelength of said digital signal.

8. The distributed acoustic sensing interrogator according to one of the preceding claims, the receiver being configured to measure the backscattered signals with a homodyne coherent detection, preferably with a single or dual polarization homodyne coherent detection.

9. A distributed acoustic sensing architecture (10, 22) comprising:
- a fiber network (11) comprising a plurality of optical fibers (16_{1-2N}, 24, 26, 15),
- the distributed acoustic sensing interrogator (1) according to one of the preceding claims, each optical channels (8_{1-2N}) being connected to one of the optical fibers and the receiver (9) being connected to the fiber network,
- a processor (20) configured to detect, from the measuring of backscattered signals, an alteration of one of the backscattered signals, called altered backscattered signal, caused by an acoustic environmental event (W₁₋₄) and to localize said acoustic environmental event by determining, at least on the basis of the wavelength of said altered backscattered signal, from which optical fiber the altered backscattered signal is returning from.

10. The distributed acoustic sensing architecture according to the preceding claim, the distributed acoustic sensing interrogator being according to the claim 3 or one of the claims 4 to 8 taken in dependency with claim 3, the processor being configured so that the determination of the optical fiber from which the altered backscattered signal is returning from is also performed on the basis of the orthogonal code (C₁₋₂) modulation of said altered backscattered signal.

11. The distributed acoustic sensing architecture (10) according to claim 9 or 10, the fiber network being a telecom network comprising a point-to-multipoint link, preferably a passive optical network (12), comprising:
- an optical feeder fiber termination (15) intended to be connected to a central office (13),
- the optical fibers (16_{1-2N}), each optical fiber being intended to be connected to a corresponding optical network unit (ONU_{1-2N}),
- a splitter (14), preferably a passive splitter, connecting the optical feeder fiber termination to each optical fibers,
the receiver being connected to the optical feeder fiber termination to receive the backscattered signals returning from the optical fibers.

12. The distributed acoustic sensing architecture (22) according to claim 9 or 10, the fiber network being a telecom network comprising a central office (13) and at least one wavelength division multiplexing architecture (DWDM₁, DWDM₂) comprising:
- a first multiplexer/demultiplexer (23₁, 25₁) to transmit optical data signals emitted by the central office,
- a second multiplexer/demultiplexer (23₂, 25₂) at a remote point of the telecom network,
- an optical feeder fiber (24, 26), being one of the optical fibers, connecting the first multiplexer/demultiplexer to the second multiplexer/demultiplexer,
the second multiplexer/demultiplexer being connected to a plurality of optical lines and being configured to direct each optical data signal, transmitted by the first multiplexer/demultiplexer, into one of the optical lines chosen on the basis of the wavelength of the optical data signal,
at least one of the optical channels of the distributed acoustic sensing interrogator being connected to the optical feeder fiber,
the receiver being connected to the optical feeder fiber to receive the backscattered signals returning from said optical feeder fiber.

13. The distributed acoustic sensing architecture according to the preceding claim, the distributed acoustic sensing interrogator being integrated inside the central office.

14. The distributed sensing interrogator architecture according to claim 12 or 13, a plurality of the optical channels of the distributed acoustic sensing interrogator being connected to the optical feeder fiber, each of the optical sensing signals transmitted by said optical channels having a wavelength (λs₁₋₄) different from the wavelength (λd₁₋₄) of the optical data signals transmitted by the first multiplexer/demultiplexer,
the wavelength division multiplexing architecture (DWDM₁) comprising a third multiplexer/demultiplexer (23₃), connected to the optical feeder fiber, and a splitter (29) configured to direct the optical data signals, respectively the optical sensing signals, transmitted by the optical feeder fiber towards the second multiplexer/demultiplexer, respectively the third multiplexer/demultiplexer,
the third multiplexer/demultiplexer being connected to the optical lines, being optical fibers, and being configured to direct each optical sensing signal into one of the optical lines chosen on the basis of the wavelength of the optical sensing signal.

15. A method for distributed acoustic sensing, using a distributed acoustic sensing architecture (10, 22) according to one of claims 9 to 14, the method comprising the successive steps:
a) emitting at least N optical sensing signals, each optical sensing signal having a wavelength (λs_{1-N}) different than the other signals, N being a number strictly greater than 1,
b) transmitting each the optical sensing signal into one of the optical fibers (16_{1-2N}, 24, 26, 15), a part of said optical sensing signal being backscattered by said one of the optical fibers, said part being called backscattered signal,
c) measuring by the receiver each backscattered signal and determining from which of the optical fibers said backscattered signal is returning from,
d) optionally, detecting an alteration of at least one of the backscattered signals caused by an acoustic environmental event (W₁₋₄) and localizing said acoustic environmental event.
